# EUROPEAN PATENT SPECIFICATION

(11) **EP 0 445 865 B1**
(45) Date of publication and mention of the grant of the patent: **02.06.1999**
(21) Application number: 91200404.1
(22) Date of filing: 26.02.1991
(51) Int. Cl.: C08J 7/04, B65D 81/34, C09D 127/08, B05D 1/02

(54) **Container made from polymeric material**
Behälter aus polymeren Materialien
Récipient en matériau polymère

(30) Priority: 05.03.1990 US 489135; 05.03.1990 US 488930
(43) Date of publication of application: 11.09.1991
(73) Proprietor: SHELL INTERNATIONALE RESEARCH MAATSCHAPPIJ B.V., 2596 HR Den Haag (NL)
(72) Inventor: Gerlowski, Leonard Edward, Katy, Texas 77493 (US); Korcz, William Harold, Houston, Texas 77063 (US); Kastelic, John Robert, Katy, Texas 77450 (US)

(56) References cited:
- US-A- 4 640 865
- US-A- 4 795 665

## Description

This invention relates to a food container which may be used for heating or cooking of food in hot air, convection, household and microwave ovens, as well as in retort sterilization or hot filling processes. More particularly, this invention relates to a shelf-stable, dimensionally heat stable container which is made of a polyketone polymer, and to a process for its preparation.

With the advent of the use of microwave ovens in addition to conventional ovens, has come the need for packages which can be used in both and which possess many other characteristics as well. The metallic packages used for "TV dinners" in years past are not satisfactory as polyfunctional packages, since the metallic packages are opaque to microwave radiation and result in uneven distribution of heat to the food and may even result in damage to the microwave oven. Thus, metallic trays have been replaced by polymeric trays for use in all types of ovens. Packages or trays are also known which are made of a material transparent to microwave energy. It has been proposed as well to use a plastic material for the package to accomplish even heat distribution to the food within a single compartment or tray in a microwave oven.

As discussed in the Applicant's European Patent Application No. 306115, multilayer polymeric containers are quite common, but not always suitable for use in ovens.

Containers of paperboard or plastics such as (1) amorphous polyamide, (2) polypropylene, (3) polyethylene terephthalate (PET), (4) crystalline PET (CPET), and (5) polycarbonate are known, but each plastic has inherent disadvantages as an oven-usable packaging container.
(1) Amorphous polyamide, for example, has low gaseous and water permeabilities, which is advantageous, but a container made of amorphous polyamide requires a minimum of a three-layer structure since the heat distortion temperature (HDT) is moderate. One or more layers of a higher heat distortion material would have to be bonded with adhesive layers, to stiffen the structure. A scrap regrind layer may be included. Also, the processing steps required to process amorphous polyamide into a container are twofold: (a) sheet coextrusion followed by (b) forming near melting, in the case of trays. Deeper containers are made by extrusion, blow moulding or injection blow moulding. The resulting container may be subjected to hot filling (the process where the container is filled with a hot liquid and then sealed while the liquid is hot), however, the container made of solely amorphous polyamide is not suitable for use in all ovens, nor is it dimensionally heat stable upon retorting.
(2) Polypropylene has extremely high O₂ and CO₂ gaseous permeabilities, (although its water permeability is very low), making it unsuitable, alone, as a shelf stable, oxygen barrier, food package. Therefore, polypropylene containing food packages generally have a minimum of four layers. Additional layers include an oxygen barrier layer, an adhesive layer, and a regrind layer to accommodate scrap generated in the forming processes which is reused in the structure. Most commercially used containers (trays, bowls, cups, tubs) start from coextruded, multilayer sheet which is subsequently thermally formed into a shape by use of a continuous web forming line having multiple tool cavities.
   Polypropylene based containers can not be used in conventional ovens heat: distortion resistance is such that significant loss of strength and stiffness have already occurred at about 120 °C. Polypropylene based packages are, however, usable in microwave ovens. Numerous commercial products exist in polypropylene containers for microwave rewarming. However, the consumer is warned on all such packages not to rewarm contents in a convection oven. Retort sterilization is practised for food products in polypropylene based containers. However, certain additional processing steps and/or modifications to the basic polypropylene materials and/or container structure must be made in order to allow such containers to survive retort sterilization in the 120 °C to 130 °C range. Examples of such steps are:
   (1) forming of the container at a temperature above the melt temperature of the polypropylene in order to preclude residual stress (thermal memory) within the polypropylene. If this is not practised, then residual stresses will be relieved during the retort heating, and result in unacceptable dimensional change (distortion of the container);
   (2) use of fillers, such as talc, to increase both stiffness at elevated temperatures and to provide added melt strength to the sheet structure in order to allow melt conveyance without appreciable web distortion prior to melt forming;
   (3) use of thick walls (1.0-1.3 mm) and/or bellows structures to resist and/or accommodate heat and pressure distorting forces acting on the container during retort;
   (4) control over pressure during retorting such that the pressure differential, inside the container as compared with the pressure within the retort (external pressure), is minimized during heat up, hold and cool down of the retort.
(3) Amorphous, non-crystalline PET (polyethylene terephthalate) and PETG (glycol-modified polyethylene terephthalate) have moderate gaseous permeability and competitive water permeability, but very low HDT's owing to their lack of crystallinity. This low HDT precludes their use in retort or hot fill processes, and neither material is suitable for oven use.
   Unsaturated, low molecular weight polyesters can be compounded as pastes with curing agents, then moulded and chemically crosslinked to produce thermoset trays with a high HDT. However, a two-step process is required wherein the paste is (1) press moulded and then (2) held for a prolonged heat cure interval in a hot mould, resulting in a very slow, multistep process. Contrasted with thermoplastic processing accomplished in a matter of seconds, the thermosetting process takes minutes. Moreover, the thermoset scrap cannot be reused in this process, adding further substantial cost to the moulded part and to the consumer. Finally, this approach does not lend itself to inclusion of other layers of material, thus barrier properties are rather poor for these structures.
(4) Crystalline PET (CPET) has low gaseous and water permeabilities, and may be formed into a container with only a monolayer of CPET required. However, the processing steps required are several. In order that the resulting container may be used in all types of ovens or hot filled, a third post-forming step is crucial in order to control the degree of crystallization of the polymer to achieve an acceptable HDT and adequate impact resistance. Moreover, the maximum crystallinity allowed for CPET is about 40%. A crystallinity of greater than about 40% results in a brittle container which breaks easily. CPET is dimensionally heat stable after retort if crystallization extent is above 30% However, the retort process temperatures will cause additional crystallization to occur in CPET rendering the container rather brittle.
(5) Polycarbonate has high gaseous permeability, making it unsuitable, alone, as a shelf stable package. A polycarbonate container requires a minimum of a four-layer structure because of the high permeability and moderate HDT of polycarbonate. A two step forming process is required and the resulting container is suitable for use in all ovens.

Thus there is a need for a thermoplastic polymer material from which a food or beverage container may be which is shelf stable impact resistant, dimensionally heat stable, may be used in conventional and microwave ovens, is hot fillible, retortable, and is rigid but not brittle.

As disclosed in the above-mentioned EP-A-306115, containers satisfying these requirements, having excellent mechanical, thermal and gas barrier properties, can be made of single layers of linear, alternating copolymers of carbon monoxide with one or more olefinically unsaturated compounds, e.g. ethene or propene. However, as can be seen from the data presented in that patent application (e.g. in Table 4), the water barrier properties of single layers of this material are in the same order of magnitude as those of polycarbonate, and worse than those of e.g. polypropene. This implies that for certain applications, especially when the container is intended for use with food or beverages at high temperatures (oven heating, retorting), the water loss from a container made of neat polyketone is less than technically or commercially acceptable.

Therefore there exists a need for a material suitable for containers intended for use with food or beverages at high temperatures, which has the same good gas barrier, mechanical and thermal properties of linear, alternating polyketones, and has in addition a low water permeability. Furthermore, manufacturing such a container should be simple, and require as few process steps as possible.

It has now been found that this need can be met by the provision of a multi-ply polymeric material which comprises a layer of linear, alternating polyketone and a layer of polyvinylidene chloride copolymer.

Accordingly, the present invention relates to a container suitable for use with food or beverages formed from a linear alternating polyketone polymer having repeating units of the formula -CO(̵A)̵ wherein A represents a moiety derived from the same or different ethylenically unsaturated hydrocarbons polymerised through the ethylenic linkage which polyketone polymer has a melting point of at least 175 °C and a limiting viscosity number of at least 0.8 dl/g, measured in m-cresol at 60 °C in a standard capillary viscosity measuring device, characterized in that the container has a co-operatively shaped coating of a copolymer of vinylidene chloride on at least one side.

The invention also relates to a process for the formation of such a container, characterized in that the process comprises the steps of:
- providing a shaped container formed from the linear alternating polyketone polymer as defined in accordance with the invention, and
- coating a copolymer of vinylidene chloride on at least one side of the container thus obtained.

US-A 4,795,665 discloses containers with a polyketone adhesive layer, coated with a copolymer of vinylidene chloride, which adhesive layer fixes the copolymer with a substrate layer. It is evident that the polyketone layer does not provide the shape of the container. Further, because at least three layers are required, its manufacture has been made more complicated

In US-A 4,640,865 substrates are described that are coated with a CO-containing polymer, and that are subsequently bonded together by subjecting the coating substrates to electromagnetic radiation. Also in this reference the shape of the container is not determined by the CO-containing polymer.

Polyketone polymer has very good O₂ and CO₂ barrier properties, and is positioned adjacent the PVDC water barrier layer to yield a structure having excellent water and gas barrier properties.

An advantage of this combination is that even with a significant number of pinholes in the PVDC material used to coat the polyketone polymer layer, there are no gas permeability problems since the polyketone polymer material forms the gas barrier. Conversely, pinholes in a PVDC layer used to coat a polypropylene layer would cause an unacceptable amount of oxygen to pass through the polypropylene layer, since the polypropylene layer is previous to the oxygen.

Additionally, in the polyketone polymer/PVDC system when the thickness of the PVDC layer is increased a small amount, the thickness of the polyketone polymer layer can be halved, significantly reducing the amount of solid plastic waste eventually discarded into the environment.

Whereas polypropylene must first be flame treated to ensure sufficient adhesion with the PVDC layer, because of the polyketones' superior adhesive properties no flame treatment of the polyketone polymer surface is necessary prior to bonding with the PVDC layer.

Also, due to an at least 28 °C higher heat distortion temperature, and a crystalline melt point of at least 50 °C higher for the polyketone polymers than for polypropylene polymers there is no need of any special measures for the melt forming, or solid phase pressure forming of polyketone based retortable containers. Thus, melt forming, the use of fillers, thick walls and complicated retorting equipment (ramped temperature and pressure control) are not required, which is the basis for major advantages in fabrication and performance to both the container manufacturer and food processor.

The shaped first material layer of the container of this invention is formed from a thermoplastic polymer, which is a linear alternating polymer of carbon monoxide and at least one ethylenically unsaturated hydrocarbon.

The linear alternating polymers, now becoming known as polyketones or polyketone polymers, have a repeating unit of the general formula -CO(̵A)̵ wherein A is the moiety derived from the same or different ethylenically unsaturated hydrocarbons polymerized through the ethylenic linkage. A variety of ethylenically unsaturated hydrocarbons of up to 20 carbon atoms inclusive, preferably up to 10 carbon atoms inclusive, are useful in the production of the linear alternating polymers. Illustrative of such hydrocarbons are ethene, propene, 1-butene, isobutene, styrene, 1-octene and 1-dodecene. Thus typical polyketone thermoplastic polymers are represented by the formula 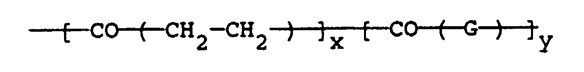 wherein G is a moiety of a second ethylenically unsaturated hydrocarbon of at least 3 carbon atoms, particularly propene, polymerized through the ethylenic unsaturation thereof. The -CO(̵CH₂CH₂)̵ units and -CO(̵G)̵ units when present are found randomly throughout the polymer chain and the ratio of y:x is preferably no more than 0.5.

The polyketone polymers will typically have a number average molecular weight, as determined by gel permeation chromatography, of at most 200,000, but more often from 20,000 to 90,000. Typically, the polymers have a melting point between 175 °C and 300 °C and a limiting viscosity number (LVN) between 0.8 dl/g and 4 dl/g. The linear alternating polymers may be produced by contacting the carbon monoxide and ethylenically unsaturated hydrocarbon in the presence of a catalyst composition formed from a compound of palladium, cobalt or nickel, the anion of a non-hydrohalogenic acid having a pKa less than 6, preferably below 2, and a bidentate ligand of phosphorus, arsenic or antimony.

Processes for polyketone production are illustrated by European Patent Applications Nos. 121,965, 181,014, 213,671 and 257,663 and the like.

The preferred linear alternating polyketones for use in the invention are linear alternating polymers of carbon monoxide, ethylene and propylene. The propylene content should be less than 7.0% by weight of the polyketone for a good heat distortion temperature, and preferably from 1% to 4% by weight of the polyketone.

Transparency of the polyketone may be increased by imposing orientation during fabrication. This may be done by stretching polyketone sheet at or just below melting as is common practice in solid phase pressure forming. A nominal 4X thickness reduction, such as accomplished in a 2X by 2X draw, is adequate for achievement of good clarity. The draw may exceed this level but only slightly better clarity is achieved. The draw does not have to be balanced.

Polyketone may be thin wall injection moulded very quickly and in one step. Thin wall injection moulding is very useful for making "deluxe" type, precision containers which have high aesthetic appeal. Crystalline polyethylene terephthalate (CPET) cannot easily be thin wall injection moulded because its crystallinity must be controlled to be no more than about 40%, or brittle containers result. Furthermore, crystallinity must be developed and controlled in CPET so that at least 30% is achieved so that these containers have heat distortion resistance.

Crystallization of polyketone occurs rapidly, and unlike CPET, the maximum percent crystallinity in the polyketone is readily achieved which results in optimum barrier properties. This important advantage eliminates any need for post forming heat treatment for annealing at elevated temperatures as practised for CPET. For best possible oxygen barrier performance, it is advantageous to use a mould heated to over 80 °C and a high packing force during moulding. This results in higher levels of crystallinity and optimum barrier performance but does not unduly prolong the moulding cycle.

Alternatively, instead of formation of the first material layer by injection moulding, a polyketone sheet may be rapidly formed into a tray, cup, bowl, tub, etc., by any thermoforming technique such as solid phase pressure forming or solid phase stretch forming. Injection moulding, however, allows more detail and functionality to be designed into the container than is achievable in formed sheet.

The shaped first material layer of the container preferably comprises a tray, cup, bowl, or tub, which includes a thin bottom wall and a peripheral structure, wherein the peripheral structure includes a thin peripheral wall extending upwardly from the bottom wall and a rim extending outwardly from the peripheral wall at the top. By "thin wall" is meant a wall thickness of no more than 1.25 mm. Preferably, these walls are from 0.125 to 1.14 mm thick and most preferably from 0.25 to 0.76 mm. The thin walls may be easily accomplished by the use of a thin wall injection moulding technique or thermoforming methods, including melt forming, melt blowing, and solid phase pressure forming. A thin wall package may be desired. By "thin wall package" it is meant that at least the bottom wall and optionally the peripheral wall extending upward from the bottom wall have thin walls.

The first material layer, after it has been spray-coated with a layer of PVDC as described hereinafter, forms a shelf stable container, ie. the package and its contents remain substantially the same without any undesirable changes due to O₂ diffusion into the container or H₂O diffusion out of the container during shelf storage.

The container is also dimensionally heat stable, in that it can withstand convection oven temperatures of up to about 230 °C. This is well above the rewarming temperature of 175 °C normally specified for CPET type trays, and provides a margin of safety to fluctuations found in most convection ovens. When the container is subjected to a standard "retort" test by autoclaving in steam at 135 °C for 30 minutes, the container substantially retains all original dimensions without significant undesirable buckling, wrinkling or distortion. Thus, it may be used for sterilization processing of foods or liquids. The container may also be used in hot air, convection, household or microwave ovens and withstand boiling temperatures, for example, as in a hot filling process, without significant buckling, distortion or cracking.

The material used in making the shaped second material layer of the container of this invention is a coating of a copolymer of vinylidene chloride, commonly called PVDC.

Conventional comonomers for PVDC are vinyl chloride and acrylonitrile, but other, less conventional comonomers such as vinylidene fluoride, methyl acrylate and methyl methacrylate are contemplated within the scope of the present invention as well. Very good results are obtained with a material called VICLAN 834 (Trademark) supplied by Imperial Chemical Industries. The comonomer content should be such that the resulting copolymer possesses both good barrier properties and good mechanical (flexural) properties, which implies a second comonomer content in the range of 2-80 % by weight typically, preferably in the range of 10-60 % by weight.

In order to provide containers which are technically and commercially attractive, it is estimated that the water loss of any contents stored in said containers should be less than 3 % by weight per year. For a container having a volume of 4 fluid ounce (11.8 cl), this amounts to a loss of about 10 mg of water per day. Obviously the water loss of the contents inside a container is dependent on the shape of the container (cylindrical containers having less surface for the same volume than rectangular containers), on the temperature (in the present application all figures are based on a room temperature of 23 °C, unless indicated otherwise), and on the outside partial water vapour pressure (humidity). However, for the purpose of the present invention these effects are minor or even negligible, and rough general guidelines for the preferred layer thickness can be deduced from the above aim of a water weight loss of less than 3 %w per year.

It was found that suitably the thickness of the second material layer is at least 1 µ, preferably in the range of 2.5-30 µ, and especially in the range of 7.5-15 µ.

The relationship between the thickness of the first layer and the thickness of the second layer follows from the ranges given hereinbefore. Preferably the thickness of the first material is 20-60 times the thickness of the thickness of the second material. When plotting graphically the annual water loss of a container versus the second material layer thickness, for a chosen first material layer thickness, an approximately hyperbolic curve results. Repeating this for several first material layer thickness, a number of such curves appear, which more or less start to overlap at second material thickness values above 30 µ (corresponding to an annual water loss of less than about 1 %w). It could be calculated from these plots that in order to satisfy the criterion of less than 3%w water loss per year, containers should preferably be made of polymeric material in which the thicknesses of the layers are chosen such that they satisfy the relationship (L₁)⁵(L₂)⁴ > 10¹⁶, where L₁ and L₂ represent the thickness in µ of the first and of the second material layer, respectively.

The PVDC layer may be applied to the shaped polyketone layer by methods known per se, such as casting an aqueous latex on the surface and allowing it to dry (cf. US-A-4714580), solvent spraying (cf. US-A-4606942) or impact spraying (cf. US-A-4515836 and US-A-4573429). As discussed in the Examples, it was determined that impact spraying was the preferred method of application of the PVDC layer to the polyketone layer.

### EXAMPLES

Four PVDC coatings from three companies were evaluated in solvent and latex based applications. All surfaces were washed with isopropanol and corona treated to provide maximum adhesion, though in an alternative embodiment it should be well recognized that the corona treatment would not be necessary.

Solution coatings consisted of 20% wt and 5 %wt solutions of copolymers identified as S 120 and S 220, prepared in 65/35 w/w mixtures of THF(tetrahydrofuran)/Toluene. Cups of 11.8 cl capacity were dipped in solution, or sprayed, and then attached to an air motor to rotate slowly in a single bank of infrared lamps (49 to 60 °C). It was found that the coatings based on 20 %w solutions, showed some inconsistencies. Multiple coats of 5 %w solutions were used to obtain the preferred coating weight of 1.40 mg/cm², (Table 1).

**TABLE 1**

| PVDC Weight of Coated Containers | | | |
|---|---|---|---|
| Application Technique | Special Notes | Polymer (PVDC) | Coating Weight (mg/cm²) |
| Impact | slow rotation | V 834 | 1.71 |
| Sprayed | | | |
| " " | quick rotation | D 8680 | 2.64 |
| " " | slow rotation | V 834 | 1.47 |
| | + IPA + | | |
| | DI water | | |
| | | | |
| Solvent | 20 %w | S 120 | 6.51 |
| Dipped | | | |
| " " | 20 %w | S 220 | 4.34 |
| " " | 5 %w | S 120 | 0.26 |
| | single coat | | |
| " " | 5 %w | S 220 | 0.19 |
| | single coat | | |
| " " | 5 %w | S 120 | 1.92 |
| | 5 coats | | |
| " " | 5 %w | S 220 | 1.78 |
| | 5 coats | | |
| | | | |
| Solvent | 5 %w | S 220 | |
| Sprayed | 1 coat | | 0.42 |
| | 2 coats | | 0.67 |
| | 3 coats | | 0.87 |
| | 4 coats | | 1.47 |

The impact spraying system according to US-A-4515836 and US-A-4573429 was used to apply latex PVDC. To apply the coating, the neat polyketone container (first material layer) was placed on a horizontal rotating mandrel. The rotational speed of the mandrel and the spray duration were timed so as to ensure one complete coat with minimal overlap of coating. In the currently preferred configuration, one airless spray gun was positioned to spray the bottom of the container, and a second airless spray gun was positioned to spray the sidewall. The nozzles of the spray gun sprayed a thin, 90 °C fan which was configured horizontally, although it could have been rotated to any desired angle. The amount of coating applied to the polyketone container layer was controlled by the container position and the spray fan and driving pressure (flow rate). Once sprayed, the mandrel was removed from the spraying cabinet and attached to an air motor. The container was then rotated between two banks of infrared lamps (49 to 60 °C) to dry for 2 to 5 minutes.

The emulsion and impact sprayed coated containers were then evaluated for water and oxygen permeability before and after being subjected to retort conditions. The results are summarized in Table 2. The water permeability is expressed as the water vapour transmission rate (WVTR), measured in g/containers-day. The oxygen permeability (PO2) is measured in cm³/container-day.

The oxygen permeability was measured on an oxygen analyzer and a value of 0.002 cm³ /container-day was considered acceptable. Water transmission was measured gravimetrically and a value of 0.01 g/container-day was considered acceptable (corresponding to 3 %wt loss per year for the present container).

**TABLE 2**

| Oxygen and Water Vapour Transmission of PVDC Coated Polyketone Thermoplastic Containers | | | | | |
|---|---|---|---|---|---|
| PVDC COATING SUMMARY | | | | | |
| | | BEFORE RETORT | | AFTER RETORT | |
| | APPLICATION | PO2 | WVTR | PO2 | WVTR |
| S 120 | SOLVENT | 0.001 | 0.010 | 0.001 | 0.010 |
| | | | | | |
| S 220 | SOLVENT | 0.001 | 0.010 | 0.001 | 0.030 |
| | | | | | |
| V 834 | LATEX | | | | |
| | DIP | -- | 0.010 | -- | 0.002 |
| | IMPACT SPRAY | 0.0015 | 0.006 | 0.0013 | 0.002 |

The V 834 was able to meet all requirements with only a very slight yellowing following retort.

In a preferred embodiment of the practice of the invention, the V 834 material would be impact sprayed onto a polyketone container layer.

Table 3 summarizes comparative heat processing, heat resistance, and barrier properties for the previously discussed materials.

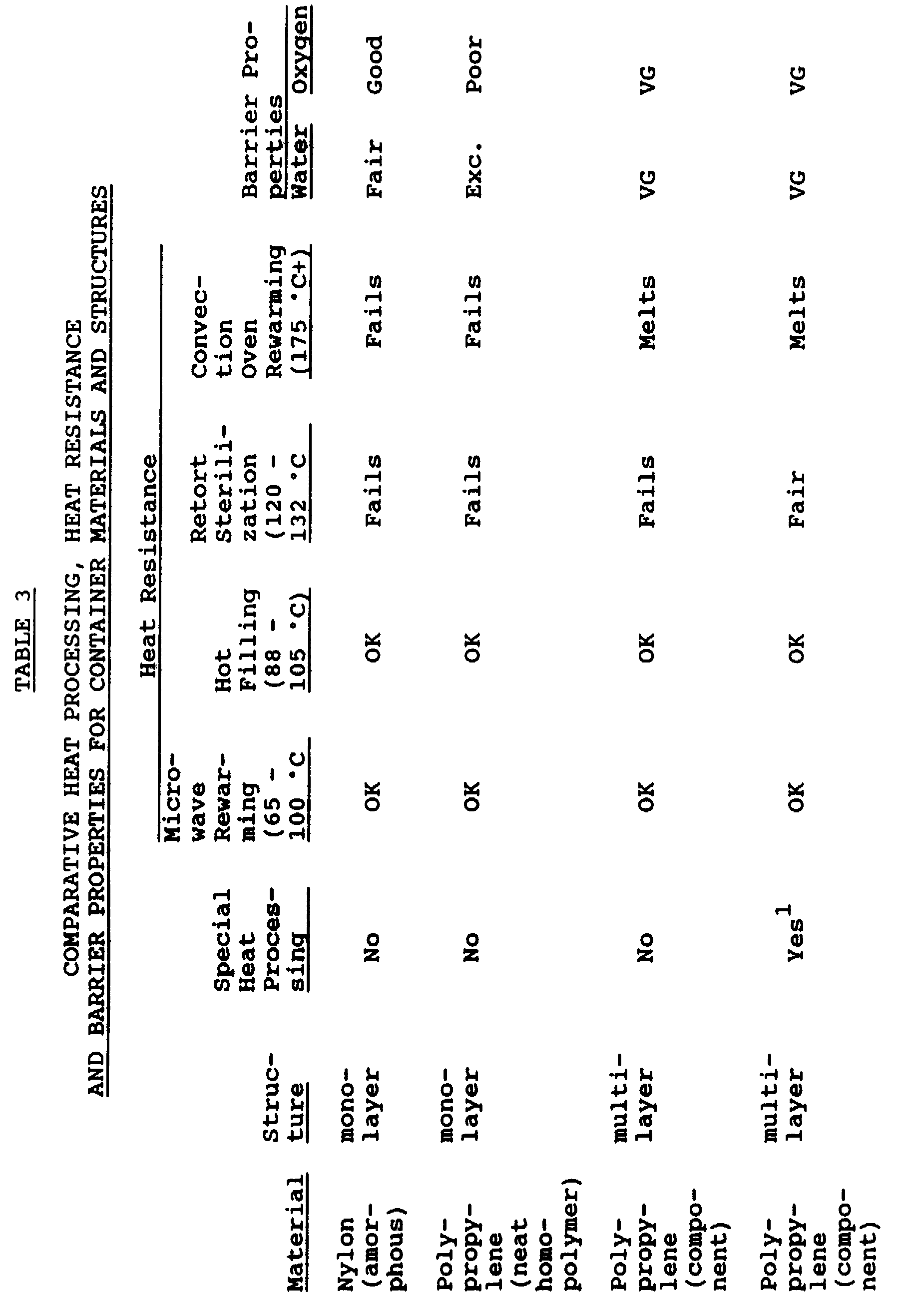

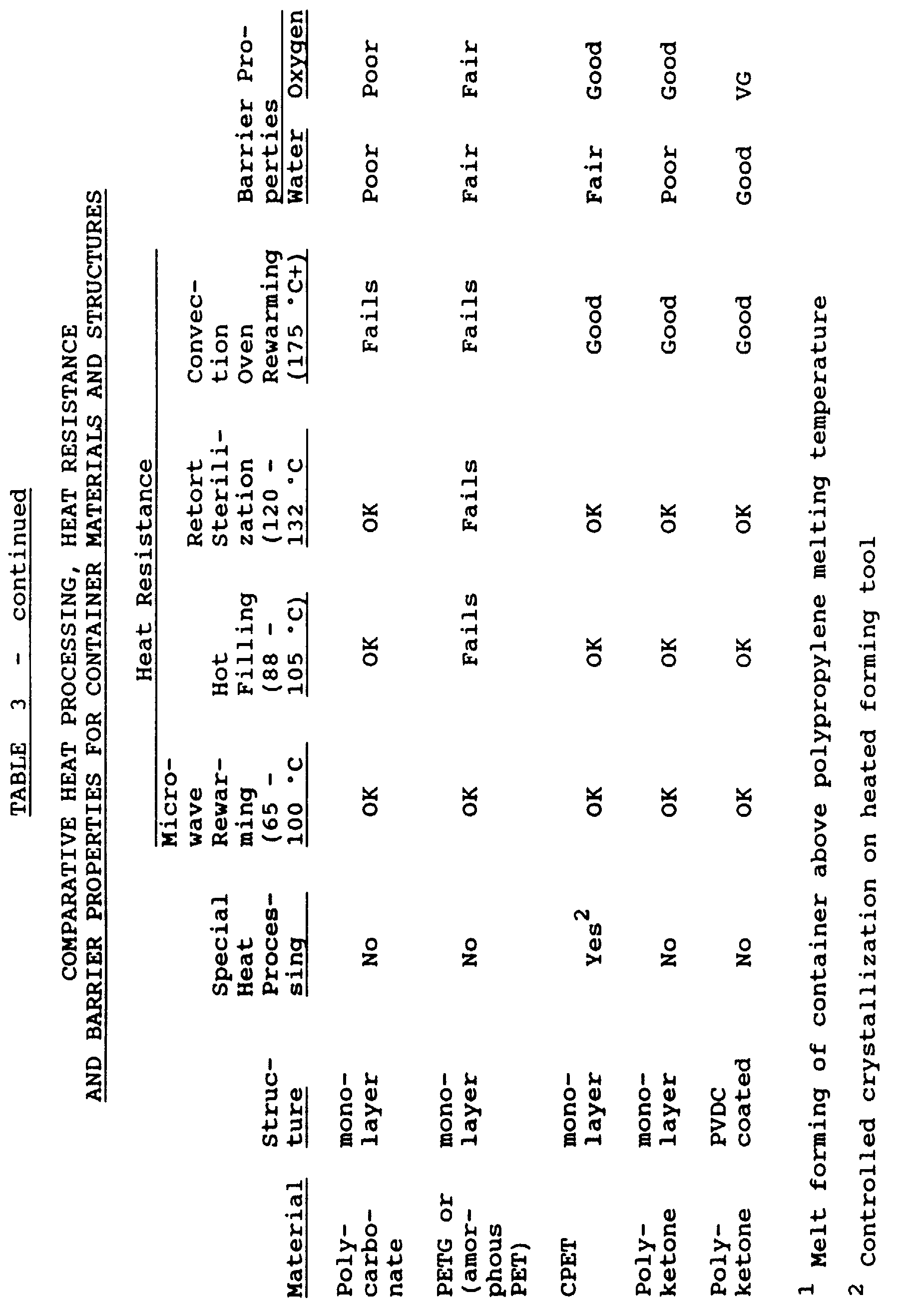

## Claims

1. A container suitable for use with food or beverages formed from a linear alternating polyketone polymer having repeating units of the formula -CO(̵A)̵ wherein A represents a moiety derived from the same or different ethylenically unsaturated hydrocarbons polymerized through the ethylenic linkage which polyketone polymer has a melting point between 175 °C and 300°C and a limiting viscosity number of at least 0.8 dl/g, measured in m-cresol at 60 °C in a standard capillary viscosity measuring device, characterized in that the container has a coating of a copolymer of vinylidene chloride on at least one side.

2. A container as claimed in claim 1, characterized in that the polyketone polymer comprises ethylene and propylene as the moieties A derived from unsaturated hydrocarbons, and that the propylene content is less than 7.0% by weight.

3. A container as claimed in claim 1 or 2, characterized in that the thickness of the polyketone polymer layer is in the range of 125-1140 µm, especially in the range of 250-760 µm.

4. A container as claimed in any of claims 1-3, characterized in that the thickness of the coating is in the range of 2.5-30 µm, especially in the range of 7.5-15 µm.

5. A container as claimed in any of claims 1-4, characterized in that the thickness of the polyketone polymer is 20-60 times the thickness of the coating.

6. A container as claimed in any of claims 1-5, characterized in that the polyketone polymer is obtainable by contacting carbon monoxide and the ethylenically unsaturated compound in the presence of palladium, cobalt or nickel, the anion of a non-hydrohalogenic acid having a pKa less than 6 and a bidentate ligand of phosphorus, arsenic or antimony.

7. Process for the formation of a polymer-based container suitable for use with food or beverages, characterized in that the process comprises the steps of:
- providing a shaped container formed from a linear alternating polyketone polymer as defined in any of claims 1, 2 or 6, and
- coating a copolymer of vinylidene chloride on at least one side of the container thus obtained.

8. A process as claimed in claim 7, characterized in that the step of providing a shaped container is done by injection moulding said layer.

9. A process as claimed in claim 7 or 8, characterized in that the step of coating said copolymer on at least one side of the container is done by impact spraying.

## Patentansprüche

1. Ein zur Anwendung mit Nahrungsmitteln oder Getränken geeigneter Behälter, gebildet aus einem linearen, alternierenden Polyketonpolymer mit wiederkehrenden Einheiten mit der Formel -CO-(A)-, worin A einen von den gleichen oder verschiedenen, ethylenisch ungesättigten Kohlenwasserstoffen abgeleiteten Rest darstellt, polymerisiert über die Ethylenverknüpfung, welches Polyketonpolymer einen Schmelzpunkt zwischen 175°C und 300°C und eine Grenzviskositätszahl von wenigstens 0,8 dl/g, bestimmt in m-Cresol bei 60°C in einer Standard-Kapillarviskositätsmeßvorrichtung, aufweist, dadurch gekennzeichnet, daß der Behälter einen Überzug aus Vinylidenchloridcopolymer auf wenigstens einer Seite aufweist.

2. Behälter nach Anspruch 1, dadurch gekennzeichnet, daß das Polyketonpolymer Ethylen und Propylen als die von ungesättigten Kohlenwasserstoffen abgeleiteten Reste A enthalt und daß der Propylengehalt kleiner als 7,0 Gew.-% ist.

3. Behälter nach Anspruch 1 oder 2, dadurch gekennzeichnet, daß die Dicke der Polyketonpolymerschicht im Bereich von 125-1.140 µm, insbesondere im Bereich von 250-760 µm liegt.

4. Behälter nach einem der Ansprüche 1-3, dadurch gekennzeichnet, daß die Überzugsdicke im Bereich von 2,5-30 µm, insbesondere im Bereich von 7,5-15 µm liegt.

5. Behälter nach einem der Ansprüche 1-4, dadurch gekennzeichnet, daß die Dicke des Polyketonpolymers das 20- bis 60-fache der Überzugsdicke beträgt.

6. Behälter nach einem der Ansprüche 1-5, dadurch gekennzeichnet, daß das Polyketonpolymer durch Inkontaktbringen von Kohlenmonoxid und der ethylenisch ungesättigten Verbindung in Gegenwart von Palladium, Kobalt oder Nickel, dem Anion einer Nichthalogenwasserstoffsäure mit einem pKa-Wert von kleiner als 6 und einem Bidentatliganden von Phosphor, Arsen oder Antimon erhältlich ist.

7. Verfahren zur Herstellung eines zur Anwendung mit Nahrungsmitteln oder Getränken geeigneten Behälters auf Polymerbasis, dadurch gekennzeichnet, daß das Verfahren die folgenden Stufen enthalt:
- Ausbildung eines geformten Behälters aus einem linearen, alternierenden Polyketonpolymer, wie in einem der Ansprüche 1, 2 oder 6 definiert, und
- Auftragen eines Vinylidenchloridcopolymerüberzugs auf wenigstens eine Seite des so erhaltenen Behälters.

8. Verfahren nach Anspruch 7, dadurch gekennzeichnet, daß die Stufe der Ausbildung eines geformten Behälters durch Spritzgießen dieser Schicht vorgenommen wird.

9. Verfahren nach Anspruch 7 oder 8, dadurch gekennzeichnet, daß die Stufe des Aufbringens des Copolymerüberzugs auf wenigstens eine Seite des Behälters durch Prallsprühen vorgenommen wird.

## Revendications

1. Récipient destiné à être utilisé avec des aliments ou boissons formé d'un polymère de polycétone alterné linéaire comportant des unités structurales de la formule -CO-(A)-, dans laquelle A représente un fragment provenant d'hydrocarbures éthyléniquement insaturés identiques ou différents polymérisés par la liaison éthylénique, lequel polymère de polycétone a un point de fusion entre 175°C et 300°C et un indice de viscosité limite d'au moins 0,8 dl/g, mesuré dans du m-crésol à 60°C dans un dispositif de mesure de viscosité capillaire standard, caractérisé en ce que le récipient présente un revêtement d'un copolymère de chlorure de vinylidène sur au moins une face.

2. Récipient suivant la revendication 1, caractérisé en ce que le polymère de polycétone comprend de l'éthylène et du propylène comme fragments A provenant d'hydrocarbures insaturés et en ce que la teneur en propylène est inférieure à 7,0% en poids.

3. Récipient suivant l'une ou l'autre des revendications 1 et 2, caractérisé en ce que l'épaisseur de la couche de polymère de polycétone est dans la gamme de 125-1140 µm, en particulier dans la gamme de 250-760 µm.

4. Récipient suivant l'une quelconque des revendications 1 à 3, caractérisé en ce que l'épaisseur du revêtement est dans la gamme de 2,5-30 µm, en particulier dans la gamme de 7,5-15 µm.

5. Récipient suivant l'une quelconque des revendications 1 à 4, caractérisé en ce que l'épaisseur du polymère de polycétone est de 20-60 fois l'épaisseur du revêtement.

6. Récipient suivant l'une quelconque des revendications 1 à 5, caractérisé en ce que le polymère de polycétone est obtenable par la mise en contact de monoxyde de carbone et du composé éthyléniquement insaturé en présence de palladium, cobalt ou nickel, de l'anion d'un acide halogénhydrique ayant un pKa inférieur à 6 et d'un ligand bidenté de phosphore, d'arsenic ou d'antimoine.

7. Procédé de formation d'un récipient à base de polymère destiné à être utilisé avec des aliments ou boissons, caractérisé en ce que le procédé comprend les étapes suivantes :
- la formation d'un récipient façonné formé d'un polymère de polycétone alterné linéaire suivant l'une quelconque des revendications 1, 2 et 6, et
- l'application d'un copolymère de chlorure de vinylidène sur au moins une face du récipient ainsi obtenu.

8. Procédé suivant la revendication 7, caractérisé en ce que l'étape de formation d'un récipient façonné est réalisée par moulage par injection de ladite couche.

9. Procédé suivant l'une ou l'autre des revendications 7 et 8, caractérisé en ce que l'étape d'application du copolymère précité sur au moins une face du récipient est réalisée par pulvérisation par impact.
